# NEW EUROPEAN PATENT SPECIFICATION

(11) **EP 3 759 014 B2**
(45) Date of publication and mention of the opposition decision: **09.09.2026**
(45) Mention of the grant of the patent: 01.11.2023
(21) Application number: 19712628.7
(22) Date of filing: 01.03.2019
(51) Int. Cl.: B62D 55/10, B62D 55/104, B62D 55/108, B62D 55/112

(54) **CRAWLED VEHICLE FOR THE PREPARATION OF SKI PISTES**
RAUPENFAHRZEUG ZUR PRÄPARATION VON SKIPISTEN
VÉHICULE À CHENILLES POUR LA PRÉPARATION DE PISTES DE SKI

(30) Priority: 02.03.2018 IT 201800003244
(43) Date of publication of application: 06.01.2021
(73) Proprietor: PRINOTH S.p.A., 39049 Vipiteno (BZ) (IT)
(72) Inventor: LEITNER, Karl, 39049 Vipiteno (BZ) (IT); MAURER, Gregor, 39049 Vipiteno (BZ) (IT)
(74) Representative: Studio Torta S.p.A.
(86) International application number: PCT/IB2019/051676
(87) International publication number: WO 2019/167020

(56) References cited:
- EP-A1- 3 222 500
- EP-A2- 1 318 067
- EP-B1- 0 352 163
- WO-A1-2019/167020
- WO-A2-2018/024758
- WO-A2-2018/024762
- WO-A2-2018/024766
- DE-A1- 102004 059 823
- US-A- 1 386 926
- US-A- 1 744 229
- US-A- 2 386 620
- US-A- 3 285 676

## Description

### CROSS-REFERENCE TO RELATED APPLICATIONS

This Patent application claims priority from Italian Patent Application No. 102018000003244 filed on March 2, 2018.

### TECHNICAL FIELD

The invention relates to a ski pistes preparation crawled vehicle.

In particular, the invention relates to a crawled vehicle comprising a frame; two wheel assemblies arranged on opposite sides of the frame; two crawls arranged around the respective wheel assemblies; and at least one supporting device for each wheel assembly, which is coupled to at least two wheels of the wheel assembly and is connected to the frame so as to couple said at least two wheels of the wheel assembly to the frame. Examples of such vehicles are shown in WO 2018/024762 A2, WO 2018/024758 A2, US 2 386 620 A and US 3 285 676 A.

### BACKGROUND ART

A drawback of the prior art lies in the fact that said crawled vehicle has undesired vibrations.

### DISCLOSURE OF INVENTION

An object of the invention is to provide a ski pistes preparation crawled vehicle which is capable of reducing the drawback of the prior art.

According to the invention, there is provided a ski pistes preparation crawled vehicle according to claim 1. Furthermore, according to the invention there is provided a ski pistes preparation crawled vehicle according to claim 10.

Thanks to the invention, the two wheels of the wheel assembly are connected to one another through the supporting device, so as to have at least one degree of freedom of movement relative to one another, which reduces the vibrations transmitted to the frame.

According to another preferred embodiment, the first and the second supporting element are connected to one another through a shock absorber, in particular in a second point different from the first point.

According to another preferred embodiment, the shock absorber has a variable stiffness and/or a variable geometry.

According to another preferred embodiment, the shock absorber is mechanical and/or hydraulic and/or electromagnetic and/or an air suspension or any combination thereof.

According to another preferred embodiment, the supporting device comprises a connection articulated joint coupled to the frame in order to couple the supporting device to the frame in an articulated manner; the articulated connection joint preferably is a hinge.

According to another preferred embodiment, the connection articulated joint is partly housed on the first and/or on the second supporting element.

According to another preferred embodiment, said at least two wheels of the wheel assembly are supporting wheel in particular free rotating wheel.

According to another preferred embodiment, the supporting device is connected to the frame through a shock absorber assembly.

According to another preferred embodiment, the shock absorber assembly has a variable stiffness and/or a variable geometry;

According to another preferred embodiment, the shock absorber assembly comprises a double-acting hydraulic cylinder.

According to another preferred embodiment, the shock absorber assembly is mechanical and/or hydraulic and/or electromagnetic and/or an air suspension or any combination thereof.

According to another preferred embodiment, each wheel assembly comprises a crawl regulating wheel, preferably a front wheel, a driving wheel, preferably a rear wheel, two pairs of supporting wheels and two supporting devices, each coupled to one respective pair of supporting wheels.

### BRIEF DESCRIPTION OF THE DRAWINGS

Other features and advantages of the invention will be best understood upon perusal of the following description of a non-limiting embodiment thereof, with reference to the accompanying drawing, wherein:
- figure 1 is a side elevation view, with parts removed for greater clarity, of a crawled vehicle according to the invention;
- figure 2 is a side elevation view of a detail of the crawled vehicle of figure 1; and
- figure 3 is a perspective view of a detail of the crawled vehicle according to an embodiment of the invention;
- figure 4 is a schematic view from the top, with parts removed for greater clarity, of the crawled vehicle of figure 1; and
- figure 5 is a side elevation view of a detail of an alternative embodiment of the crawled vehicle.

### BEST MODE FOR CARRYING OUT THE INVENTION

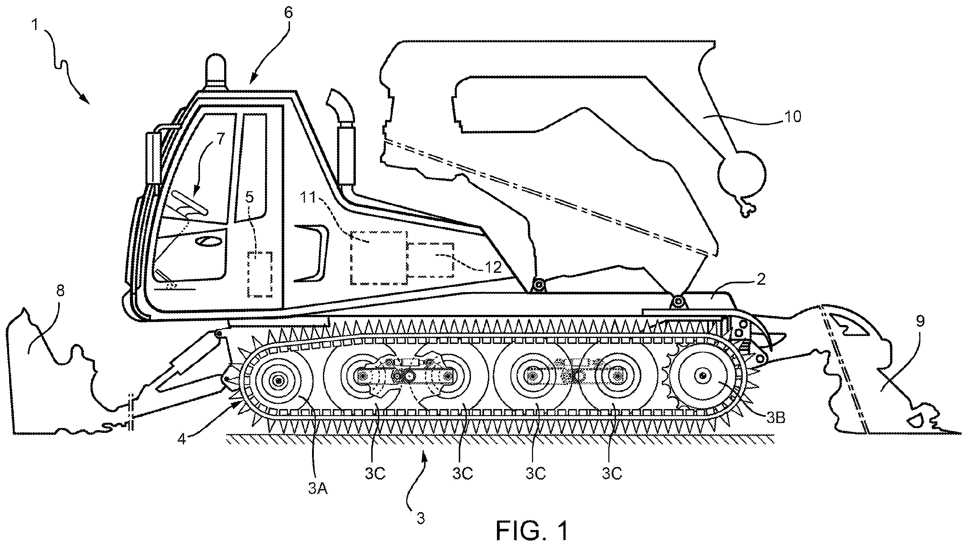

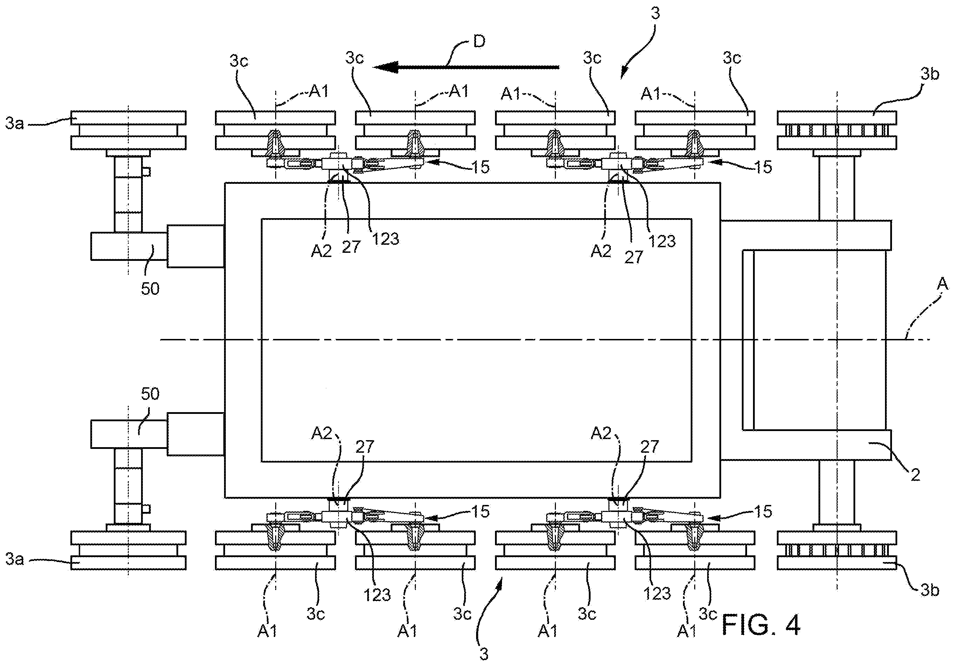

With reference to figure 1, number 1 defines, as a whole, a crawled vehicle for the preparation of ski pistes, designed to be moved in a moving direction D (figure 4).

With reference to figure 1, the crawled vehicle 1 comprises a frame 2; two wheel assemblies 3 (only one of them is shown in figure 1) with a variable configuration and arranged on opposite sides of the frame 2; and two crawls 4, each wound around one of the two respective wheel assemblies 3.

With reference to figures 1 and 4, the frame 2 extends along an axis A and supports the wheel assemblies 3.

Each wheel assembly 3 comprises a front wheel 3a, a rear wheel 3b and four central wheels 3c arranged between the front wheel 3a and the rear wheel 3b. The wheel 3b is a driving wheel.

With reference to figure 4, each front wheel 3a is connected to the frame 2 by means of a carriage 50, which is coupled to the frame 2 so that it can slide along the direction of extension of the crawl 3 (preferably parallel to the moving direction) by means of an actuator, which is not shown in the accompanying figure, in order to keep the respective crawl 4 stretched in any configuration assumed by the remaining wheels 3 of the wheel assembly 3.

With reference to figure 1, the crawled vehicle 1 comprises a control assembly 5; a cabin 6; a user interface 7 arranged in the cabin 6; a shovel 8, which is supported by the frame 2 on the front side; a cutter 9, which is supported by the frame 2 on the rear side; a winch assembly 10, which is fixed above the frame 2; and internal combustion engine 11; and a powertrain 12, which is operatively connected to the internal combustion engine 11; to the driving wheels 3b; to the shovel 8; to the cutter 9; and to the winch assembly 10. The powertrain 12 can be hydraulic or electric or a combination of hydraulic and electric.

The configurations of the crawls 4 depend on the configurations of the respective wheel assemblies 3. In particular, each wheel assembly 3 can be adjusted between to limit configurations, so as to adjust a crawl portion in contact with the snow surface M.

The central wheels 3c of each wheel assembly 3 are coupled two by two to respective supporting devices 15, which, in turn, are connected to the frame 2 in a movable manner.

For each supporting device 15, the crawled vehicle 1 comprises a shock absorber assembly 160 with a variable configuration and a variable stiffness to connect the respective two central wheels 3c, in particular through the supporting devices 15, to the frame 2, absorb possible hits and selectively change the position between the central wheels 3c and the frame 2.

In other words, each supporting device 15 is connected to the frame through a respective shock absorber assembly 160. In particular, the shock absorber assembly 160 has a variable stiffness and a variable geometry, so as to change the reaction of the shock absorber assembly 160 to hits and be able to change the position of the crawled vehicle relative to the snow and of the crawl portion in contact with the snow.

In the non-limiting example of the invention discussed herein, the crawled vehicle 1 comprises a supporting device 15 for each pair of central wheels 3c of the wheel assembly 3. In other words, each supporting device 15 is coupled to two central wheels 3c of the wheel assembly 3; as a consequence, for each wheel assembly 3, the crawled vehicle 1 comprises two supporting devices 15. Each supporting device 15 is coupled to two central wheels 3c.

Furthermore, each supporting device 15 couples the respective two central wheels 3c of the wheel assembly 3 to the frame 2 in an articulated manner, so as to couple said at least two central wheels 3c of the wheel assembly 3 to the frame 2.

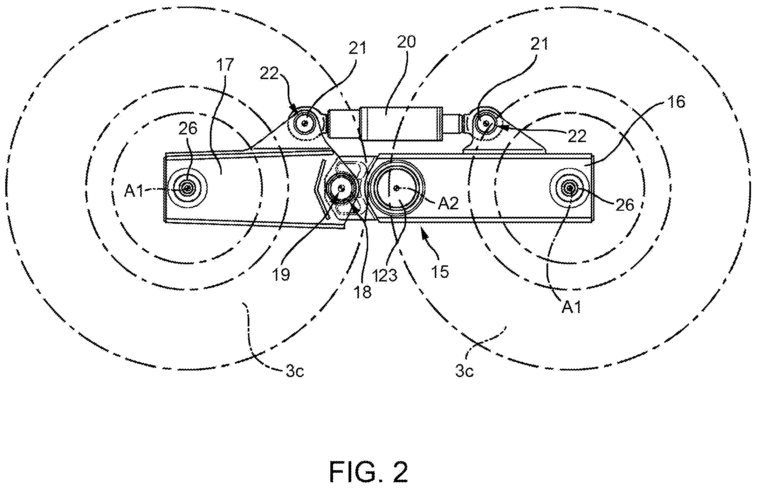

With reference to figure 2, the supporting device 15 has a first supporting element 16, which supports one of the two central wheels 3c; and a second supporting element 17, which supports another one of the two central wheels 3c; and wherein the first supporting element 16 and the second supporting element 17 are connected to one another through a first articulated joint 18 in a first point 19. The first articulated joint 18 is a hinge.

Furthermore, the first and the second supporting element 16 and 17 are connected to one another through a shock absorber 20, in points 21 that are different from the point 19. More in detail, the supporting device 15 comprises the shock absorber 20, which is connected to the first and to the second element by means of articulated joints 22 placed in the points 21, in particular two articulated joints 22 in the two points 21. The articulated joints 22 preferably are hinges.

In a preferred embodiment, the shock absorber 20 has a variable stiffness.

In another preferred embodiment, the shock absorber 20 has a variable geometry.

In another preferred embodiment, the shock absorber 20 has a variable stiffness and a variable geometry.

Furthermore, the shock absorber (20) is mechanical and/or hydraulic and/or electromagnetic and/or an air suspension or any combination thereof.

More in detail, the supporting device 15 comprises a connection articulated joint 123, which is partly housed on the first supporting element 16 and is coupled to the frame 2 so as to couple the supporting device 15 to the frame 2 in an articulated manner. The articulated joint 123 preferably is a hinge.

The central wheels 3c are supporting wheels, in particular they are free rotating wheels. Furthermore, the central wheels 3c are middle wheels, which are placed between the front wheel 3a and the rear wheel 3b.

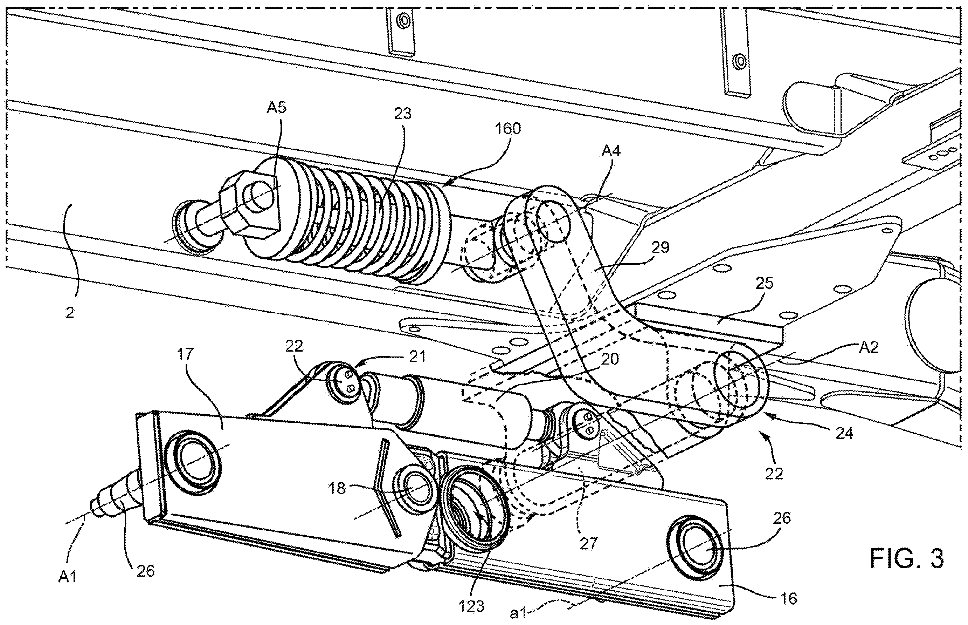

With reference to figure 3, each shock absorber assembly 160 comprises a mechanical connection arranged between the frame 2 and the supporting device 15. The mechanical connection comprises a double-acting hydraulic cylinder 23, a crank 24 and a plate 25 supporting the crank 24. The support device 15 comprises two attachments 26 for the two respective central wheels 3c around two rotation axes A1, which are transverse to the axis A (figure 1). The crank 24 comprises a shaft 27 with axis A2, which is parallel to the axes A1 and is mounted so as to rotate around the axis A2 in the support plate 25 fixed to the frame 2; an arm 29, which is integral to the shaft 27 and is mounted so as to rotate, at an end of the hydraulic cylinder 23, around an axis A4, which is parallel to the axes A1.

The hydraulic cylinder 23 has a first end fixed to the frame 2 so as to rotate around an axis A5, which is parallel to the axes A1. In this way, by changing the length of the hydraulic cylinder 23, it is possible to change the distance of the supporting device 15 from the frame 2 or, even better, the distance of the axis A2 from the frame 2, because the supporting device 15 can freely oscillate around the axis A2 and, hence, change the position of the respective central wheels 3 relative to the frame 2.

The control assembly 5 comprises a control unit 13 and the user interface 7 and has the function of acquiring a signal indicating an operating state of the crawled vehicle 1 as a function of at least one operating parameter of the crawled vehicle and, preferably, of a plurality of operating parameters, as well as the function of adjusting the configurations of the wheel assemblies 3 as a function of the signal indicating the operating state, in particular the function of adjusting the configuration and/or the stiffness of the shock absorber assemblies 160.

In a preferred, though non-limiting embodiment of the invention, the control units 13, through the signal indicating the operating state, controls the shock absorbers 20 one by one or jointly.

In particular, through a manual mode, the driver controls both the position and the stiffness of the shock absorber assembly 160 and/or of each shock absorber or of all shock absorbers 20 through the support of the displaying on the user interface 7.

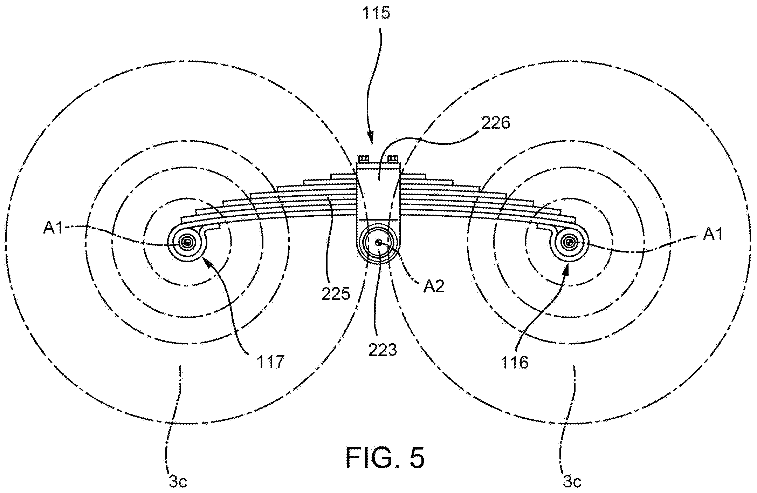

In an alternative embodiment of the invention and with reference to figure 5, the supporting device 15 is replaced by a supporting device 115. The supporting device 115 comprises an elastic structure 225, in particular a leaf spring, as well as a first supporting element 116 and a second supporting element 117, which are arranged at respective ends of the elastic structure 225, in particular of the leaf spring, where two respective central wheels 3c are connected and supported. In the embodiment of figure 5, the ends of the spring leas 225 define the first and the second supporting element 116 and 117. In an alternative embodiment, the elastic structure is defined by a fibreglass structure or a carbon structure comprising, at the respective ends, two supporting elements, which are connected to two respective central wheels 3c.

Furthermore, the supporting device 115, similarly to the supporting device 15, comprises a connection articulated joint 223, which is connected to the elastic structure 225 by means of a connection element 226. The connection articulated joint 223 is coupled to the frame 2 so as to couple the supporting device 115 to the frame 2 in an articulated manner. The articulated joint 223 preferably is a hinge. In this embodiment, the elastic structure 225 allows the central wheels 3c to make movements in the range of 60 mm around the balance position, preferably 20 mm around the balance position. Furthermore, the invention evidently also covers embodiments that are not described in the detailed description above as well as embodiments that are part of the scope of protection set forth in the appended claims.

## Claims

1. Ski pistes preparation crawled vehicle; the crawled vehicle (1) comprising:
- a frame (2);
- two wheels assemblies (3) displaced at opposite side with respect to the frame (2);
- two crawls (4), each of them wounded respectively around to one of the two wheels assemblies (3);
- at least one supporting device (15; 115), for each wheels assemblies (3), coupled to at least two wheels (3c) of the wheels assembly (3) and connected in an articulated jointed manner to the frame (2) for coupling the at least two wheels (3c) of the wheels assembly (3) to the frame (2); wherein the supporting device (15; 115) has a first supporting element (16; 116), which supports one of the at least two wheels (3c) of the wheels assembly (3); and a second supporting element (17; 117), which supports another of the two wheels (3c) of the wheels assembly (3); and wherein the first supporting element (16; 116) and the second supporting element (17; 117) are connected between them through a first articulated joint (18) in a first point (19); the first articulated joint (18) is a hinge;
- wherein the wheels assembly (3) comprises a driving wheel (3b), that is a rear wheel;
- wherein the wheels assembly (3) comprises a regulating crawl wheel (3a), that is a front wheel, having a mobile position with respect to the frame (2) to stretch the crawl (4);
- wherein the at least two wheels (3c) are middle wheels between the regulating crawl wheel (3a) and the driving wheel (3b) and preferably are free rotating wheels;
the vehicle comprising:
- at least a further articulated joint (22) to couple the first supporting element (16) with the second supporting element (17) in an articulated jointed manner, the further articulated joint (22) is a hinge.

2. Crawled vehicle according to claim 1, wherein the first and the second supporting element (16, 17) are connected between them through a shock absorber (20) in particular in an at least a second point (21) different from the first point (19).

3. Crawled vehicle according to claim 3, wherein the shock absorber (20) has a variable stiffness and/or a variable geometry.

4. Crawled vehicle according to claim 3 or 4, wherein the shock absorber (20) is of mechanic type and/or hydraulic type and/or electromagnetic type and/or an air suspension type or anyone combination of said type.

5. Crawled vehicle according to anyone of the foregoing claims, wherein the supporting device (15) comprises a connection articulated joint (123; 223) coupled to the frame (2) to couple in an articulated jointed manner the supporting device (15; 115) to the frame (2); preferably the articulated connection joint (123; 223) is a hinge.

6. Crawled vehicle according to anyone of the foregoing claims, wherein the at least two wheels (3c) of the wheels assembly (3) are supporting wheel in particular free rotating wheel.

7. Crawled vehicle according to anyone of the foregoing claims, wherein the supporting device (15) is connected to the frame (2) through a shock absorber assembly (160) .

8. Crawled vehicle according to claim 8, wherein the shock absorber assembly (160) has a variable stiffness and/or a variable geometry; in particular the shock absorber assembly (160) comprises a hydraulic cylinder (23) preferably a double effect type.

9. Crawled vehicle according to anyone of the foregoing claims, wherein each wheels assembly (3) comprises a regulating crawl wheel (3a) preferably a front wheel; a driving wheel (3b) preferably a rear wheel; two couple of supporting wheel (3c) and two supporting device (15; 115), each of them coupled to one respectively couple of supporting wheels (3c).

10. Ski pistes preparation crawled vehicle; the crawled vehicle (1) comprising:
- a frame (2);
- two wheels assemblies (3) displaced at opposite side with respect to the frame (2);
- two crawls (4), each of them wounded respectively around to one of the two wheels assemblies (3);
- at least one supporting device (15; 115), for each wheels assemblies (3), coupled to at least two wheels (3c) of the wheels assembly (3) and connected in an articulated jointed manner to the frame (2) for coupling the at least two wheels (3c) of the wheels assembly (3) to the frame (2); wherein the supporting device (15; 115) has a first supporting element (16; 116), which supports one of the at least two wheels (3c) of the wheels assembly (3); and a second supporting element (17; 117), which supports another of the two wheels (3c) of the wheels assembly (3); and wherein the first supporting element (16; 116) and the second supporting element (17; 117) are connected between them in an elastically flexible manner;
- wherein the wheels assembly (3) comprises a driving wheel (3b), that is a rear wheel;
- wherein the wheels assembly (3) comprises a regulating crawl wheel (3a), that is a front wheel, having a mobile position with respect to the frame (2) to stretch the crawl (4);
- wherein the at least two wheels (3c) are middle wheels between the regulating crawl wheel (3a) and the driving wheel (3b) and preferably are free rotating wheels;
- wherein the first supporting element (116) and the second supporting element (117) are connected between them through an elastic structure (225), in particular a leaf spring, a fiberglass structure, or a carbon structure;
- wherein the supporting device (115) comprises an elastic structure (225), in particular a leaf spring, a fiberglass structure, or a carbon structure; the first supporting element (116) and the second supporting element (117) are defined by respective portions or by respective ends of the elastic structure, in particular by respective portions or ends of the leaf spring or fiber glass structure or carbon structure.

11. Crawled vehicle according to claim 10,
wherein the elastic structure (225) is a leaf spring, a fiberglass structure, or a carbon structure; and wherein the first supporting element (116) and the second supporting element (117) are defined by respective portions or ends of the leaf spring or fiber glass structure or carbon structure.

12. Crawled vehicle according to claims 10 and 11, wherein the supporting device (15) comprises a connection articulated joint (123; 223) coupled to the frame (2) to couple in an articulated jointed manner the supporting device (15; 115) to the frame (2); preferably the articulated connection joint (123; 223) is a hinge.

13. Crawled vehicle according to anyone of the claims from 10 to 12, wherein the at least two wheels (3c) of the wheels assembly (3) are supporting wheel in particular free rotating wheel.

14. Crawled vehicle according to anyone of the claims from 10 to 13, wherein the supporting device (15) is connected to the frame (2) through a shock absorber assembly (160) .

15. Crawled vehicle according to claim 14, wherein the shock absorber assembly (160) has a variable stiffness and/or a variable geometry; in particular the shock absorber assembly (160) comprises a hydraulic cylinder (23) preferably a double effect type.

16. Crawled vehicle according to anyone of the claims from 10 to 15, wherein each wheels assembly (3) comprises a regulating crawl wheel (3a) preferably a front wheel; a driving wheel (3b) preferably a rear wheel; two couple of supporting wheel (3c) and two supporting device (15; 115), each of them coupled to one respectively couple of supporting wheels (3c).

## Patentansprüche

1. Raupenfahrzeug zum Präparieren von Skipisten; wobei das Raupenfahrzeug (1) umfasst:
- einen Rahmen (2);
- zwei Radanordnungen (3), die in Bezug auf den Rahmen (2) auf gegenüberliegenden bzw. entgegengesetzten Seiten versetzt sind;
- zwei Raupenketten (4), die jeweils um eine der beiden Radanordnungen (3) gewickelt sind;
- zumindest eine Stütz- bzw. Trägervorrichtung (15; 115) für jede Radanordnung (3), die mit zumindest zwei Rädern (3c) der Radanordnung (3) gekoppelt ist und gelenkverbindungsartig mit dem Rahmen (2) zum Koppeln der zumindest zwei Räder (3c) der Radanordnung (3) mit dem Rahmen (2) verbunden ist; wobei die Stütz- bzw. Trägervorrichtung (15; 115) ein erstes Stütz- bzw. Trägerelement (16; 116), das eines der zumindest zwei Räder (3c) der Radanordnung (3) stützt bzw. trägt; und ein zweites Stütz- bzw. Trägerelement (17; 117) aufweist, das ein anderes der zwei Räder (3c) der Radanordnung (3) stützt bzw. trägt; und wobei das erste Stütz- bzw. Trägerelement (16; 116) und das zweite Stütz- bzw. Trägerelement (17; 117) in einem ersten Punkt (19) über eine erste Gelenkverbindung (18) untereinander verbunden sind; wobei die erste Gelenkverbindung (18) ein Scharnier ist;
- wobei die Radanordnung (3) ein Antriebsrad (3b) umfasst, das ein Hinterrad ist;
- wobei die Radanordnung (3) ein regulierendes Raupenkettenrad (3a) umfasst, das ein Vorderrad ist, das eine bewegliche Position in Bezug auf den Rahmen (2) aufweist, um die Raupenkette (4) zu strecken;
- wobei die zumindest zwei Räder (3c) Mittelräder zwischen dem regulierenden Raupenkettenrad (3a) und dem Antriebsrad (3b) sind und vorzugsweise freidrehende Räder sind;
wobei das Fahrzeug umfasst:
- zumindest eine weitere Gelenkverbindung (22) zum gelenkverbindungsartigen Koppeln des ersten Trägerelements (16) mit dem zweiten Trägerelement (17), wobei die weitere Gelenkverbindung (22) ein Scharnier ist.

2. Raupenfahrzeug nach Anspruch 1, wobei das erste und das zweite Trägerelement (16, 17) über einen Stoßdämpfer (20) insbesondere in zumindest einem zweiten Punkt (21), der sich von dem ersten Punkt (19) unterscheidet, untereinander verbunden sind.

3. Raupenfahrzeug nach Anspruch 2, wobei der Stoßdämpfer (20) eine variable Steifigkeit und/oder eine variable Geometrie aufweist.

4. Raupenfahrzeug nach Anspruch 2 oder 3, wobei der Stoßdämpfer (20) vom mechanischen Typ und/oder vom hydraulischen Typ und/oder vom elektromagnetischen Typ und/oder vom Typ mit Luftfederung oder einer beliebigen Kombination dieser Typen ist.

5. Raupenfahrzeug nach einem der vorhergehenden Ansprüche, wobei die Stützvorrichtung (15) ein gelenkiges Verbindungsgelenk (123; 223) umfasst, das mit dem Rahmen (2) gekoppelt ist, um die Stützvorrichtung (15; 115) gelenkverbindungsartig mit dem Rahmen (2) zu koppeln; wobei vorzugsweise das gelenkige Verbindungsgelenk (123; 223) ein Scharnier ist.

6. Raupenfahrzeug nach einem der vorhergehenden Ansprüche, wobei die zumindest zwei Räder (3c) der Radanordnung (3) Stützräder, insbesondere freidrehende Räder, sind.

7. Raupenfahrzeug nach einem der vorhergehenden Ansprüche, wobei die Stützvorrichtung (15) über eine Stoßdämpferanordnung (160) mit dem Rahmen (2) verbunden ist.

8. Raupenfahrzeug nach Anspruch 7, wobei die Stoßdämpferanordnung (160) eine variable Steifigkeit und/oder eine variable Geometrie aufweist; wobei insbesondere die Stoßdämpferanordnung (160) einen Hydraulikzylinder (23), vorzugsweise vom Doppeleffekttyp, umfasst.

9. Raupenfahrzeug nach einem der vorhergehenden Ansprüche, wobei jede Radanordnung (3) ein regulierendes Raupenkettenrad (3a), vorzugsweise ein Vorderrad; ein Antriebsrad (3b), vorzugsweise ein Hinterrad; zwei Stützradpaare (3c) und zwei Stützvorrichtungen (15; 115) umfasst, die jeweils mit einem jeweiligen Stützradpaar (3c) gekoppelt sind.

10. Raupenfahrzeug zum Präparieren von Skipisten; wobei das Raupenfahrzeug (1) umfasst:
- einen Rahmen (2);
- zwei Radanordnungen (3), die in Bezug auf den Rahmen (2) auf gegenüberliegenden bzw. entgegengesetzten Seiten versetzt sind;
- zwei Raupenketten (4), die jeweils um eine der beiden Radanordnungen (3) gewickelt sind;
- zumindest eine Stütz- bzw. Trägervorrichtung (15; 115) für jede Radanordnung (3), die mit zumindest zwei Rädern (3c) der Radanordnung (3) gekoppelt ist und gelenkverbindungsartig mit dem Rahmen (2) zum Koppeln der zumindest zwei Räder (3c) der Radanordnung (3) mit dem Rahmen (2) verbunden ist; wobei die Stütz- bzw. Trägervorrichtung (15; 115) ein erstes Stütz- bzw. Trägerelement (16; 116), das eines der zumindest zwei Räder (3c) der Radanordnung (3) stützt bzw. trägt; und ein zweites Stütz- bzw. Trägerelement (17; 117) aufweist, das ein anderes der zwei Räder (3c) der Radanordnung (3) stützt bzw. trägt; und wobei das erste Stütz- bzw. Trägerelement (16; 116) und das zweite Stütz- bzw. Trägerelement (17; 117) auf elastisch flexible Weise untereinander verbunden sind;
- wobei die Radanordnung (3) ein Antriebsrad (3b) umfasst, das ein Hinterrad ist;
- wobei die Radanordnung (3) ein regulierendes Raupenkettenrad (3a) umfasst, das ein Vorderrad ist, das eine bewegliche Position in Bezug auf den Rahmen (2) aufweist, um die Raupenkette (4) zu strecken;
- wobei die zumindest zwei Räder (3c) Mittelräder zwischen dem regulierenden Raupenkettenrad (3a) und dem Antriebsrad (3b) sind und vorzugsweise freidrehende Räder sind;
- wobei das erste Trägerelement (116) und das zweite Trägerelement (117) durch eine elastische Struktur (225), insbesondere eine Blattfeder, eine Glasfaserstruktur oder eine Carbonstruktur, untereinander verbunden sind;
- wobei die Stützvorrichtung (115) eine elastische Struktur (225), insbesondere eine Blattfeder, eine Glasfaserstruktur oder eine Carbonstruktur, umfasst; wobei das erste Trägerelement (116) und das zweite Trägerelement (117) durch jeweilige Abschnitte oder durch jeweilige Enden der elastischen Struktur, insbesondere durch jeweilige Abschnitte oder Enden der Blattfeder oder Glasfaserstruktur oder Carbonstruktur definiert sind.

11. Raupenfahrzeug nach Anspruch 10, wobei die elastische Struktur (225) eine Blattfeder, eine Glasfaserstruktur oder eine Carbonstruktur ist; und wobei das erste Trägerelement (116) und das zweite Trägerelement (117) durch jeweilige Abschnitte oder Enden der Blattfeder oder Glasfaserstruktur oder Carbonstruktur definiert sind.

12. Raupenfahrzeug nach Anspruch 10 und 11, wobei die Stützvorrichtung (15) ein gelenkiges Verbindungsgelenk (123; 223) umfasst, das mit dem Rahmen (2) gekoppelt ist, um die Stützvorrichtung (15; 115) gelenkverbindungsartig mit dem Rahmen (2) zu koppeln; wobei vorzugsweise das gelenkige Verbindungsgelenk (123; 223) ein Scharnier ist.

13. Raupenfahrzeug nach einem der Ansprüche 10 bis 12, wobei die zumindest zwei Räder (3c) der Radanordnung (3) Stützräder, insbesondere freidrehende Räder, sind.

14. Raupenfahrzeug nach einem der Ansprüche 10 bis 13, wobei die Stützvorrichtung (15) über eine Stoßdämpferanordnung (160) mit dem Rahmen (2) verbunden ist.

15. Raupenfahrzeug nach Anspruch 14, wobei die Stoßdämpferanordnung (160) eine variable Steifigkeit und/oder eine variable Geometrie aufweist; wobei insbesondere die Stoßdämpferanordnung (160) einen Hydraulikzylinder (23), vorzugsweise vom Doppeleffekttyp, umfasst.

16. Raupenfahrzeug nach einem der Ansprüche 10 bis 15, wobei jede Radanordnung (3) ein regulierendes Raupenkettenrad (3a), vorzugsweise ein Vorderrad; ein Antriebsrad (3b), vorzugsweise ein Hinterrad; zwei Stützradpaare (3c) und zwei Stützvorrichtungen (15; 115) umfasst, die jeweils mit einem jeweiligen Stützradpaar (3c) gekoppelt sind.

## Revendications

1. Véhicule à chenilles pour la préparation de pistes de ski ; le véhicule à chenilles (1) comprenant :
- un châssis (2) ;
- deux ensembles de roues (3) déplacés sur le côté opposé par rapport au châssis (2) ;
- deux chenilles (4), chacune d'elles étant enroulée respectivement autour de l'un des deux ensembles de roues (3) ;
- au moins un dispositif de support (15 ; 115), pour chaque ensemble de roues (3), couplé à au moins deux roues (3c) de l'ensemble de roues (3) et relié de manière articulée au châssis (2) pour coupler les au moins deux roues (3c) de l'ensemble de roues (3) au châssis (2) ; dans lequel le dispositif de support (15 ; 115) comporte un premier élément de support (16 ; 116), qui supporte l'une des au moins deux roues (3c) de l'ensemble de roues (3) ; et un deuxième élément de support (17 ; 117), qui supporte une autre des deux roues (3c) de l'ensemble de roues (3) ; et dans lequel le premier élément de support (16 ; 116) et le deuxième élément de support (17 ; 117) sont reliés entre eux par un premier joint articulé (18) en un premier point (19) ; le premier joint articulé (18) est une charnière ;
- dans lequel l'ensemble de roues (3) comprend une roue motrice (3b), qui est une roue arrière ;
- dans lequel l'ensemble de roues (3) comprend une roue de réglage de chenille (3a), qui est une roue avant, ayant une position mobile par rapport au châssis (2) pour tendre la chenille (4) ;
- dans lequel les au moins deux roues (3c) sont des roues intermédiaires entre la roue de réglage de chenille (3a) et la roue motrice (3b) et sont de préférence des roues à rotation libre ;
le véhicule comprenant :
- au moins un joint articulé supplémentaire (22) pour coupler le premier élément de support (16) avec le deuxième élément de support (17) de manière articulée, le joint articulé supplémentaire (22) est une charnière.

2. Véhicule à chenilles selon la revendication 1, dans lequel le premier et le deuxième élément de support (16, 17) sont reliés entre eux par un amortisseur (20), en particulier en au moins un deuxième point (21) différent du premier point (19).

3. Véhicule à chenilles selon la revendication 2, dans lequel l'amortisseur (20) présente une rigidité variable et/ou une géométrie variable.

4. Véhicule à chenilles selon la revendication 2 ou 3, dans lequel l'amortisseur (20) est de type mécanique et/ou de type hydraulique et/ou de type électromagnétique et/ou de type à suspension pneumatique, ou toute combinaison desdits types.

5. Véhicule à chenilles selon l'une quelconque des revendications précédentes, dans lequel le dispositif de support (15) comprend un joint articulé de raccordement (123 ; 223) couplé au châssis (2) pour coupler de manière articulée le dispositif de support (15 ; 115) au châssis (2) ; de préférence, le joint articulé de raccordement (123 ; 223) est une charnière.

6. Véhicule à chenilles selon l'une quelconque des revendications précédentes, dans lequel les au moins deux roues (3c) de l'ensemble de roues (3) sont des roues de support, en particulier des roues à rotation libre.

7. Véhicule à chenilles selon l'une quelconque des revendications précédentes, dans lequel le dispositif de support (15) est relié au châssis (2) par l'intermédiaire d'un ensemble amortisseur (160).

8. Véhicule à chenilles selon la revendication 7, dans lequel l'ensemble amortisseur (160) présente une rigidité variable et/ou une géométrie variable ; en particulier, l'ensemble amortisseur (160) comprend un vérin hydraulique (23), de préférence de type à double effet.

9. Véhicule à chenilles selon l'une quelconque des revendications précédentes, dans lequel chaque ensemble de roues (3) comprend une roue de réglage de chenille (3a), de préférence une roue avant ; une roue motrice (3b), de préférence une roue arrière ; deux paires de roues de support (3c) et deux dispositifs de support (15 ; 115), chacun d'eux étant couplé à une paire respective de roues de support (3c).

10. Véhicule à chenilles pour la préparation de pistes de ski ; le véhicule à chenilles (1) comprenant :
- un châssis (2) ;
- deux ensembles de roues (3) déplacés sur le côté opposé par rapport au châssis (2) ;
- deux chenilles (4), chacune d'elles étant enroulée respectivement autour de l'un des deux ensembles de roues (3) ;
- au moins un dispositif de support (15 ; 115), pour chaque ensemble de roues (3), couplé à au moins deux roues (3c) de l'ensemble de roues (3) et relié de manière articulée au châssis (2) pour coupler les au moins deux roues (3c) de l'ensemble de roues (3) au châssis (2) ; dans lequel le dispositif de support (15 ; 115) comporte un premier élément de support (16 ; 116), qui supporte l'une des au moins deux roues (3c) de l'ensemble de roues (3) ; et un deuxième élément de support (17 ; 117), qui supporte une autre des deux roues (3c) de l'ensemble de roues (3) ; et dans lequel le premier élément de support (16 ; 116) et le deuxième élément de support (17 ; 117) sont reliés entre eux de manière élastiquement flexible ;
- dans lequel l'ensemble de roues (3) comprend une roue motrice (3b), qui est une roue arrière ;
- dans lequel l'ensemble de roues (3) comprend une roue de réglage de chenille (3a), qui est une roue avant, ayant une position mobile par rapport au châssis (2) pour tendre la chenille (4) ;
- dans lequel les au moins deux roues (3c) sont des roues intermédiaires entre la roue de réglage de chenille (3a) et la roue motrice (3b) et sont de préférence des roues à rotation libre ;
- dans lequel le premier élément de support (116) et le deuxième élément de support (117) sont reliés entre eux par une structure élastique (225), en particulier un ressort à lames, une structure en fibre de verre ou une structure en carbone ;
- dans lequel le dispositif de support (115) comprend une structure élastique (225), en particulier un ressort à lames, une structure en fibre de verre ou une structure en carbone ; le premier élément de support (116) et le deuxième élément de support (117) sont définis par des parties respectives ou par des extrémités respectives de la structure élastique, en particulier par des parties respectives ou des extrémités respectives du ressort à lames ou de la structure en fibre de verre ou de la structure en carbone.

11. Véhicule à chenilles selon la revendication 10, dans lequel la structure élastique (225) est un ressort à lames, une structure en fibre de verre ou une structure en carbone ; et dans lequel le premier élément de support (116) et le deuxième élément de support (117) sont définis par des parties respectives ou des extrémités respectives du ressort à lames ou de la structure en fibre de verre ou de la structure en carbone.

12. Véhicule à chenilles selon les revendications 10 et 11, dans lequel le dispositif de support (15) comprend un joint articulé de raccordement (123 ; 223) couplé au châssis (2) pour coupler de manière articulée le dispositif de support (15 ; 115) au châssis (2) ; de préférence, le joint articulé de raccordement (123 ; 223) est une charnière.

13. Véhicule à chenilles selon l'une quelconque des revendications 10 à 12, dans lequel les au moins deux roues (3c) de l'ensemble de roues (3) sont des roues de support, en particulier des roues à rotation libre.

14. Véhicule à chenilles selon l'une quelconque des revendications 10 à 13, dans lequel le dispositif de support (15) est relié au châssis (2) par l'intermédiaire d'un ensemble amortisseur (160).

15. Véhicule à chenilles selon la revendication 14, dans lequel l'ensemble amortisseur (160) présente une rigidité variable et/ou une géométrie variable ; en particulier, l'ensemble amortisseur (160) comprend un vérin hydraulique (23), de préférence de type à double effet.

16. Véhicule à chenilles selon l'une quelconque des revendications 10 à 15, dans lequel chaque ensemble de roues (3) comprend une roue de réglage de chenille (3a), de préférence une roue avant ; une roue motrice (3b), de préférence une roue arrière ; deux paires de roues de support (3c) et deux dispositifs de support (15 ; 115), chacun d'eux étant couplé à une paire respective de roues de support (3c).
